# EUROPEAN PATENT APPLICATION

(11) **EP 2 960 274 A1**
(43) Date of publication of application: **30.12.2015**
(21) Application number: 14173534.0
(22) Date of filing: 23.06.2014
(51) Int. Cl.: C08K 3/00, C08K 3/04, C08L 77/06, C08L 77/10, C08F 2/44, C01B 31/02, C01B 31/04

(54) **One pot synthesis of thermally reduced graphene oxide (TRGO)-polymer nanocomposites.**

(71) Applicant: Solvay SA, 1120 Bruxelles (BE)
(72) Inventor: BOBENRIETH, Alexis, 7000 Mons (BE)
(74) Representative: Vande Gucht, Anne

(57) **Abstract**

Process for manufacturing a thermally reduced graphene oxide-polymer nanocomposite from graphene oxide and monomer(s) comprising at least:
(A) a thermal reduction of graphene oxide, so as to form said thermally reduced graphene oxide, and
(B) a polymerization of the monomer(s) in the presence of said thermally reduced graphene oxide to yield said nanocomposite,
(A) and (B) being performed in the same reactor,
wherein polymerization (B) is only started when the oxygen content of the thermally reduced graphene oxide formed from the graphene oxide reaches a value below 15%. The present invention further relates to a nanocomposite and a Masterbatch obtainable by said process.

## Description

Process for manufacturing a thermally reduced graphene oxide-polymer nanocomposite from graphene oxide and monomer(s) comprising at least:
(A) a thermal reduction of graphene oxide, so as to form said thermally reduced graphene oxide, and
(B) a polymerization of the monomer(s) in the presence of said thermally reduced graphene oxide to yield said nanocomposite,
(A) and (B) being performed in the same reactor,
wherein polymerization (B) is only started when the oxygen content of the thermally reduced graphene oxide formed from the graphene oxide reaches a value below 15%.

The present invention further relates to a nanocomposite and a Masterbatch obtainable by said process.The present invention generally relates to the field of nanoparticle-filled polymer composites, more particularly to a process for producing polymers with thermally reduced graphene oxide (TRGO) having improved useful properties, such as mechanical, barrier and electrical properties.

The introduction of graphene (constitutive layers of pristine graphite) into a polymer matrix can markedly improve its properties, like mechanical behavior, electrical and thermal conductivity or barrier properties. There has been a great interest in the last years to develop polymer nanocomposites filled with graphene nanosheets for getting better mechanical, thermal and/or conductive properties thereof

The manufacture of such composites with optimized performance requires that graphene sheets are produced on a sufficient scale, and that they are incorporated homogeneously in the polymer matrix.

One of the ways that has been largely explored therefore is the preparation of conductive reduced graphene oxide composites. Graphite oxide, derived from the oxidation of graphite (for e.g. by Staudenmaier or Hummers methods), is an extensively studied starting material for the scalable preparation of graphene nanosheets. Indeed, exfoliation of graphene oxide is rendered easier in aqueous medium due to high hydrophilic properties.However it is proven that it is necessary to reduce graphene oxide (GO). Indeed, GO becomes electrically insulating due to the presence thereon of oxygen-containing groups, such as hydroxyl, epoxide and carboxyl groups. These functional groups disrupt the sp2 structure of graphene nanosheets and therefore GO becomes electrically insulating. To obtain electrically conductive polymer nanocomposites, reduction of GO is required to remove most of its oxygen-containing groups and restore the graphitic network of sp2 bonds.

As far as compromise in terms of properties for such filled nanocomposites is clearly desired, conductivity and mechanical properties have to be both present in the final products at interesting degrees.

Thermal reduction and expansion of graphite oxide powder is currently carried out at very high temperature, typically above 900°C. In such a case, the incorporation of the resulting reduced graphene oxide nanosheets in the polymer is performed in a second step, *via* solvent blending, melt compounding.

Following this two steps procedure, the preparation of the composite implies the manipulation of volatile graphene nanopowder, which represents a potential risk for the health and makes its handling difficult. Moreover, it should be noticed that incorporating the GO directly in the polymer melt, in an extruder, can be dangerous because an explosion occurs due to the reduction/expansion phenomenon.

Moreover, reduced graphene oxide is hardly dispersible in aqueous media and polar solvents which can make inefficient the predispersion and stability of reduced graphene oxide with the monomers solutions before the polymerization.

To solve this two problems, different authors experienced the simultaneous *in situ* polymerization of various polymers and thermal reduction of GO at polymerization temperature (≤300°C). The key point of this approach relies on good dispersion of GO in the monomer(s) or solvent, followed by *in situ* polymerization initiated either by heat or by the addition of a suitable compound. Said in situ polymerization has been considered as the most efficient technique.

Document Dan Zheng et al., « In situ thermal reduction of graphene oxide for high electrical conductivity and low percolation threshold in polyamide 6 nanocomposites », Composites Science and Technology, 72 (2012) 284-289, describes an in situ polymerization, more precisely a ring-opening polymerization of PA6 (monomer: ε-caprolactam & initiator: 6-aminocaproic acid) with graphene oxide (GO). The GO can be thermally reduced (a) at high temperature (≥1000°C) before the polymerization or (b) in-situ simultaneously with the polymerization, at low temperature (polymerization temperature, which is 220-260°C). This second option is performed by dispersing the GO and dissolving the monomers in water. After water evaporation, the polymerization is initiated. The GO reduction occurs during the polymerization. The electrical conductivity target of way (b) is concluded as being similar to the composite via the two steps process (a).

The following other documents also describe the simultaneous steps of reduction of GO and of polymerization for various polymer types: Ok-Kyung Parket al. "In situ Synthesis of Thermo chemically Reduced Graphene Oxide Conducting Nanocomposites", Nanoletters, 2012, 12, 1789-1793 and K.Liu et al., "Preparation of polyester/reduced graphene oxide composites via in situ melt polycondensation and simultaneous thermo-reduction of graphene oxide", J. Mater. Chem., 2011, 21, 8612-8617.

The inventors have demonstrated that a polymer filled with TRGO may advantageously be produced in two-steps but in the same reactor: Thermal reduction of graphite oxide may be performed close to the polymerization temperature, in particular under inert atmosphere, and may be followed by *an in situ* polymerization of the monomers, that are added once GO is converted into TRGO.

This strategy presents the advantage to be applicable to a wide range of polymers, in particular selected from aromatic and aliphatic polyamides, polyamide-imide, aliphatic polyamides, polyesters and polyurethanes.

One other advantage of this method lies in the fact that the two steps occur in the same vial, which avoids the manipulation of volatile graphene. This is also a gain of time because it is not necessary to cool down the reactor to transfer the TRGO to another vial for the polymerization step.

Moreover carboxylic acid, alcohol and epoxy functionalities are present on the GO's surface. These functions can act as an end chain or initiate the polymerization, and consequently decrease the average molecular weight of the polymer, responsible for lower mechanical properties and lower processability. Moreover, the short polymer chains grafted on the GO surface lead to a loss of conductivity. Regarding this aspect, the present invention is particularly interesting if the monomers are strong reducing agents, like a diamine as it will be developed herein after.

As it will be outlined in the examples, the thermal reduction before the polycondensation results among all in better conductivity properties than when the reduction/polymerization occur simultaneously.

The present invention may be implemented to produce a Masterbatch, as detailed herein after. According to this embodiment, said Masterbatch can be diluted in any type of polymeric matrix in the melt, *via* extrusion for example, provided that the process temperature is compatible with both matrices.

The present invention relates to a process for manufacturing a thermally reduced graphene oxide-polymer nanocomposite from graphene oxide and monomer(s) comprising at least:
(A) a thermal reduction of graphene oxide, so as to form said thermally reduced graphene oxide, and
(B) a polymerization of the monomer(s) in the presence of said thermally reduced graphene oxide to yield said nanocomposite,
(A) and (B) being performed in the same reactor,
wherein polymerization (B) is only started when the oxygen content of the thermally reduced graphene oxide formed from the graphene oxide reaches a value below 15%.

According to another of its aspects, a subject of the invention is also directed to a nanocomposite obtainable by the process according to the present invention, in particular a nanocomposite wherein the graphene material is a thermally reduced graphene oxide, wherein the graphene material is present in the nanocomposite in an amount of less than 3% by weight, in particular of less than 2.5% by weight and more particularly equal or less than 2% by weight, with respect to the total weight of the nanocomposite, and in particular wherein the nanocomposite has a transversal resistivity which is at least decreased by a factor 10⁵ compared to a reference nanocomposite obtained by *in situ* simultaneous reduction of the graphene oxide and the polymerization of the same polymer in presence of the graphene oxide.

It further relates to a Masterbatch obtainable by the process according to the present invention, wherein the thermally reduced graphene oxide is present in the Masterbatch in an amount above 3% by weight, in particular ranging from 3 to 5% by weight, in particular from 5 to 10% by weight, for example from 10 to 20% by weight, with respect to the total weigh of the Masterbatch.

Within the framework of the present invention, the term "filler" as used herein means the thermally reduced graphene oxide.

### PROCESS FOR PRODUCING NANOCOMPOSITES

According to the present invention, the reduction of graphene oxide takes place prior to the polymerization step, in the same reactor, which can be an autoclave reactor. The fact that the process takes place in one unique reactor is a real advantage in terms of ease during the manipulations. A gain in safety of the process is also to be stated in comparison to the processes of the prior art implying more process steps and manipulations.

The monomer(s) are added, prior to the polymerization (B), i.e. after the completion of the reduction step.

The different steps as mentioned above are described hereinafter. Said steps are successive but this does not exclude that additional steps may be intercalated between said steps, before or after.

For the purpose of the present invention, the term monomer(s) encompasses the reaction medium comprising the monomers and optionally any other additional filler, which may be added prior to the polymerization step. One may cite carbon nanotubes as additional filler. Other ingredients than fillers may also be added, such as end-chain agent, plasticizers or polymerization catalysts. However, they should not be present in amounts that would negatively impact the improved properties as awaited in the framework of the present invention.

### (A) Thermal reduction of graphene oxide

Graphite oxide (GO) may be introduced in an autoclave reactor, for example with classic closure type, for example at room temperature. The remained air may then be flushed with an inert gaz.

As far as the reduction step itself is concerned, the graphene oxide may be reduced by heating at a temperature greater than the polymerization temperature, the temperature difference between the reduction temperature and the polymerization temperature being equal or less than 100°C, in particular equal or less than 20°C.

The reduction temperature shall preferably be not too high in comparison to the polymerization temperature in order to avoid a long cooling time. This is particularly advantageous is comparison to processes of the prior art implementing very high reduction temperatures, merely for this gain of time in the process.

The GO may in particular be heated at a temperature greater than 200°C in order to produce thermally reduced graphene (TRGO). The reduction temperature may for example vary from 200 to 400°C, in particular from 200 to 350°C, and more particularly from 200°C to 300°C.

The heating duration depends on the temperature. The duration of said heating may range from 2 to 10 hours, for example from 2 to 5 hours.

As a general rule the higher the temperature, the shorter the treatment is.

Following the reduction steps as described above, the monomer(s) may be added under stirring in the reactor before polymerization (B).

The monomer(s) may be incorporated or added to the TRGO and the obtained mixture may be maintained under gentle stirring.

Said monomer(s) addition may be performed at the polymerization temperature.

This addition step may typically last a few minutes, for example between 1 to 30 min.

This addition step may also comprise any addition of optional additional fillers or other ingredients useful for the polymerization as already mentioned above in connection to the definition of the monomer material.

### (B) Polymerization

According to a particular embodiment, polymerization (B) is only started when the oxygen content of the thermally reduced graphene oxide formed from the graphene oxide reaches a value ranging from 2 to 15%, in particular equal or below 9%, and more particularly from 2 to 9%.

The oxygen content generally gauges the degrees of polarity of a graphene material, and in particular a TRGO and also, in the framework of the present invention characterizes the oxygen content of the TRGO, i.e. its rate of reduction.

The measurement may be performed by X-ray photoelectron spectroscopy (XPS)

According to a particular embodiment, polymerization (B) is a melt polymerization, and is in particular performed under inert gas, more particularly under stirring and under heating and optionally under pressure.

These parameters and the polymerization duration depend on the polymer targeted, typically from its nature and its molecular weight.

The polymerization conditions are well known to the man skilled in the art.

In particular, the polymerization may be conducted with various steps of temperature.

The quantities of the different ingredients depend of the targeted filler concentration in the nanocomposite and the volume of the reactor.

The thermally reduced graphene oxide may be present in the nanocomposite in an amount ranging from 0.01 to 20%, in particular from 0.01 to 10%, and more particularly from 0.5 to 5% by weight, with respect to the total weight of the nanocomposite.

The nanocomposite obtainable by the process according to the invention forms part of the invention.

The nanocomposite according to the present invention may be distinguished from a reference nanocomposite obtained *by in situ* simultaneous polymerization of the same polymer in presence of GO by a transversal resistivity measurement. Typically, a nanocomposite obtainable by the process according to the present invention may present a transversal resistivity which is at least decreased by a factor 10⁵ compared to a reference nanocomposite obtained by *in situ* simultaneous reduction of the graphene oxide and the polymerization of the same polymer in presence of the graphene oxide.

The nanocomposite according to the present invention may be distinguished from the same polymer taken alone by a Young modulus measurement.

Typically, a nanocomposite obtainable by the process according to the present invention may present a Young modulus value, as measured according ASTM D638, which is at least 5% greater, or generally around 10% greater, than the same polymer taken alone.

### Percolation threshold

The percolation threshold is the filler content at which a drop of property occurs.

The percolation threshold can be different depending on the property aimed to be improved, such as typically mechanical properties or conductivity as illustrated in the examples. It is closely linked to the quality of the filler dispersion at the nanoscale; the better the dispersion, the lower the percolation threshold.

Typical targeted thermally reduced graphene oxide content is very low as described above because the *in situ* polymerization leads to an extremely good dispersion at the nanoscale.

However, said values may also not be identical. In the illustrated example, the percolation threshold is almost identical for the Young Modulus and the electrical conductivity, namely 2% by weight with respect to the total weight of the nanocomposite. It is a common knowledge for the man skilled in the art that conductivity increases with the increase of the amount of conductive filler (for example TRGO as illustrated in the example) in the sense of the present invention. However, increasing of the filler amount may present adverse effects in decreasing the mechanical properties, in terms of loss of ductility. A compromise of the filler amount may then be seeked for responding to the targeted properties, depending mainly on the application.

According to a particular embodiment of the present invention, the thermally reduced graphene oxide amount corresponding to the percolation threshold for mechanical and conductivity properties is less than 3% by weight with respect to the total weight of the nanocomposite or of the Masterbacth.

### THERMALLY REDUCED GRAPHENE OXIDE

Graphene itself is usually considered as a one-atom thick planar sheet of sp2-bonded carbon atoms that are densely packed in a honeycomb structure. The name graphene is derived from graphite and the suffix -ene. Graphite itself consists of a high number of graphene sheets stacked together.

Graphite, carbon nanotubes, fullerenes and graphene in the sense referred to above share the same basic structural arrangement of their constituent atoms. Each structure begins with six carbon atoms, tightly bound together chemically in the shape of a regular hexagon - an aromatic structure similar to what is generally referred to as benzene.

Perfect graphenes consist exclusively of hexagonal cells; pentagonal and heptagonal cells constitute defects in the structure. If an isolated pentagonal cell is present, the plane warps into a cone shape and the insertion of 12 pentagons would create a fullerene.

At the next level of organization is graphene itself, a large assembly of benzene rings in a basically planar sheet of hexagons that resembles chicken wire. The other graphitic forms are built up out of graphene. Buckyballs and the many other non tubular fullerenes can be thought of as graphene sheets wrapped up into atomic-scale spheres, elongated spheroids and the like. Carbon nanotubes are essentially graphene sheets rolled into minute cylinders. And finally, graphite is a thick, three-dimensional stack of graphene sheets; the sheets are held together by weak, attractive intermolecular forces (van der Waals forces). The feeble coupling between graphite sheets enables graphite to be broken up into miniscule wafers.

In the chemical literature graphene was defined officially in 1994 by the IUPAC (Boehm et al., Pure an Appl. Chemistry 66, 1893-1901 (1994)) as follows.

A single carbon layer of the graphitic structure can be considered as the final member of the series naphthalene, anthracene, coronene, etc. and the term graphene should therefore be used to designate the individual carbon layers in graphite intercalation compounds.

According to the IUPAC compendium on technology, the term graphene should only be used when the reactions, structural relations or other properties of individual layers are discussed, but not for three-dimensional structures.

In the literature graphene has also been commonly referred to as monolayer graphite.

One way to obtain graphene is to exfoliate it, i.e. to peel it off from graphite with an adhesive tape repeatedly. Graphene produced this way is, however, extremely expensive.

Another method is to heat silicon carbide to temperatures above 1100°C to reduce it to graphene. This process produces a sample size that is dependent upon the size of the SiC substrate used. However, again products obtained by this process are still very expensive.

Experimental methods have been reported for the production of graphene ribbons consisting of cutting open carbon nanotubes (Nature 2009, 367). Depending on the substrate used (single- or multi-walled nanotubes) single graphene sheets or layers of graphene sheets can be obtained. However, due to the fact that carbon nanotubes are very expensive materials, graphene products obtained this way are not commercially feasible as components of polymer compositions.

M. Choucair et al., Nature Nanotechnology 4, 30-33 (2009) disclose a process for producing gram quantities of graphene by the reduction of ethanol by sodium metal, followed by pyrolysis of the ethoxide product and washing with water to remove sodium salts.

Another way of obtaining graphene layers is *via* the oxidation of highly ordered graphite. This oxidation introduces oxygen-bearing functional groups into the graphite layers, which under suitable conditions may be deprotonated to a certain extent (or more or less completely), resulting in an electrostatic repulsion between the resulting negative charges of adjacent layers. After sonication, the graphite layers separate and a graphene oxide solution is obtained which may be put on a substrate and then reduced or may be reduced and then put on a substrate. A suitable process is e.g. described in ACS Nano 2008, 2(3), pages 463 to 470 (Becerril et al., Evaluation of solution processed reduced graphene oxide films as transparent conductors).

The process according to the present invention implements a thermal reduction step (A) from graphene oxide as detailed herein above.

As used herein, the term:
- "graphene" relates to a single-atom-thick sheet of hexagonally arranged carbon atoms freely suspended or adhered on a foreign substrate. The lateral dimensions are from hundreds nm to few microns.
- "Graphite" is a thick, three-dimensional stack of graphene sheets, having a thickness superior to 100 nm.
- "graphene oxide" (GO) means an oxidized graphene monolayer or few-layer material with a high oxygen content characterized by an oxygen content of less than 50% by weight, in particular close to 20% by weight.
- "Expanded graphite" is a multilayer made by partial exfoliation (thermal, chemical, or mechanical) of graphite into thin multilayer packets that retain the 3D crystal stacking of graphite. This is an operational definition based on the fabrication process. More precisely, expanded graphite means a graphite structure obtained for example by acidic treatment, in particular using H₂SO₄ or HNO₃ followed by a flash treatment in inert atmosphere, giving multi-layer graphene, typically exceeding 10 layers.
- "reduced graphene oxide" (rGO) means a GO (as previously defined) reductively processed for example by thermal or a chemical treatment, but also by other treatments such as microwave, photo-chemical, photo-thermal or microbial/bacterial. The oxygen content is consequently reduced to a value at most equal to 10%, preferably below 5 and more preferably below 2%.

Graphene oxide may be produced according to known methods, and for example according to the Hummers method applied to expanded graphite as illustrated in the examples.

The TRGO that may be obtained following the termal reduction step (A) may be characterized prior to the implementation of the polymerization (B). Said characterization may be the specific surface area and the oxygen content.

The specific surface area (SSA) of TRGO can vary over a wide range, but is generally higher than the specific surface area of standard graphite when measured under identical conditions. This is an indication of the inherently much finer scale and exfoliation of the graphene sheets of TRGO than expanded graphite for example

The specific surface area, as measured by the BET method (as described below), preferably exceeds 30 m²/g, more preferably 50 m²/g and even more preferably 100 m²/g, or even 300 m²/g.

TRGO having high surface areas, preferably exceeding about 100 m²/g provide often beneficial effects in barrier properties, thermal conductivity and antistatic properties when used to produce nanocomposites in accordance with the instant invention

The BET measurement can be carried out as follows:
The BET specific surface area is determined by gas adsorption on the ASAP2020 equipment from Micromeritics. Prior to the analysis, the graphene material is filled in a specific glass tube of 10cm³. Around 75% of the total volume of the tube is filled; this means that depending of the material density, the total mass of the sample can vary a lot, typically from 50 to 300 mg. The graphene material is then pretreated under vacuum (A) standardly at 110°C or (B) at 40-50°C in the case of oxidized graphene material, until a stable vacuum of 4 µbar has been reached. This step can last several hours. This second heating procedure (B) is applied to decrease at maximum the risk of reduction of the material, resulting in a mass loss and an artificially increase of the SSA.

The measurements are performed using nitrogen as adsorptive gas at 77K by volumetric method, according to the ISO 9277: 2010 (Determination of the specific surface area of solids by gas adsorption - BET method) standard.

The BET specific surface area is calculated, in the standard case (A) in a relative pressure (P/P₀) range from 0.05 to 0.2 or (B) in a relative pressure (P/P₀) range chosen so that the BET C constant is positive according to the annex C of the ISO 9277: 210 standard. The method described in this annex requires drawing the graph of na(1-P/P₀) vs P/P₀ (with na the specific adsorbed quantity and P/P₀ the relative pressure).

The application of the BET equation should be limited to the pressure range where the quantity na(1-P/P₀) continuously increases with P/P₀. The maximum P/P₀ value is thus the relative pressure for which the quantity na(1-P/P₀) is maximum. At least five points equal and lower than the maximum P/P₀ value are chosen to apply the BET theory.

### POLYMER

According to the present invention, the polymer may be selected from semi-aromatic polyamides, aliphatic polyamides, polyesteramides, polyurethanes, polyimides, polyamide-imides, polyarylene-polyethers, polyesters, polyether-imides, polyester-imides, polymeric amic acid derivatives.

All these polymers are known to the man skilled in the art and the corresponding monomers are available as commercial products in a wide variety.

According to a preferred embodiment of the present invention, aromatic polymers are preferred, i.e. polymers comprising aromatic groups.

According to one aspect of said embodiment, the polymer is a semi-aromatic polyamide.

A monomer is considered for the purpose of this invention as "aromatic" when it comprises one or more than one aromatic group. A monomer is considered for the purpose of this invention as "non-aromatic" or "aliphatic" when it does not contain aromatic groups.

In particular, a diacid (or derivative thereof) or a diamine is considered for the purpose of this invention as "aromatic" when it comprises one or more than one aromatic group. A diacid (or derivative thereof) or a diamine or an aminocarboxylic acid (or derivative thereof) is considered for the purpose of this invention as "non-aromatic" or "aliphatic" when it does not contain aromatic groups.

The term diacid derivative is intended to encompass any compound, e.g. acid halogenides, especially chlorides, acid anhydrides, acid salts, acid amides and the like.

### MONOMERS

Examples of monomers are gathered hereinafter, which are largely known from the man skilled in the art and not limiting for the implementation of the present invention:

Non limitative examples of **aromatic diamines** are m-phenylene diamine (MPD), p-phenylene diamine (PPD), 3,4'-diaminodiphenyl ether (3,4'-ODA), 4,4'-diaminodiphenyl ether (4,4'-ODA), m-xylylene diamine (MXDA), as shown below : 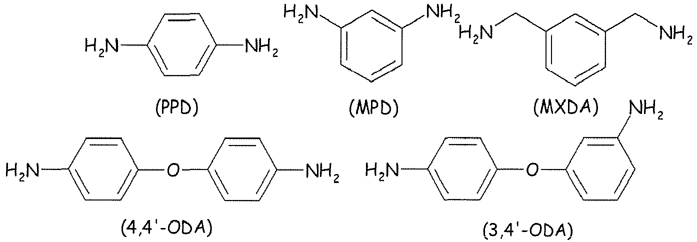 and p-xylylenediamine (PXDA, not represented).

The further following aromatic diamines may also be cited: 2,2-bis(p-aminophenyl)propane, 4.4'-diaminodiphenyl-methane, 4.4'-diaminodiphenyl sulfide, 4,4'-diaminodiphenyl sulfone, 4,4'-diaminodiphenyl ether, 1,5-diaminonaphthalene, 3,3-dimethylbenzidine and 3,3'-dimethoxybenzidine.

Non limitative examples of **aliphatic diamine** are 1,2-diaminoethane, 1,2-diaminopropane, propylene-1,3-diamine, 1,3-diaminobutane, 1,4-diaminobutane, 1,5-diaminopentane, 1,6-hexanediamine or hexamethylenediamine (HMDA), 1,8-diaminooctane, 1,10-diaminodecane, 1,12-diaminododecane or 1-amino-3-*N-*methyl-*N*-(3-aminopropyl)-aminopropane.

**Cycloaliphatic diamines** may comprise at least one carbocyclic ring having of from 4 to 8 carbon atoms in the ring. Non limitative examples of **Cycloaliphatic diamines** are 1,3-bis(aminomethyl)cyclohexane, bis-(4- aminocyclohexyl)methane or bis(3-methyl-4-aminocyclohexyl)methane are also suitable.

Non limitative examples of **aromatic diacids** are e.g. phthalic acids, including isophthalic acid (IPA), terephthalic acid (TPA) and orthophthalic acid (also referred to simply as phthalic acid or PA hereinafter), naphthalenedicarboxylic acids, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, and bis(3-carbo xypheno xy)benzene.

For the avoidance of doubt, the chemical structures of IPA, TPA, PA are depicted herein below:

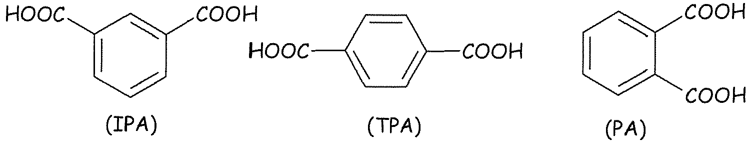

Non limitative examples of **aliphatic diacids** are oxalic acid (HOOC-COOH), malonic acid (HOOC-CH₂-COOH), succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], adipic acid [HOOC-(CH₂)₄-COOH], 2,4,4-trimethyl-adipic acid [HOOC-CH(CH₃)-CH₂-C(CH₃)₂- CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH] and tetradecanedioic acid [HOOC-(CH₂)₁₂-COOH].

Among **aromatic diols** the following may be cited:

| | |
|---|---|
| 4,4'-dihydroxydiphenyl oxide | 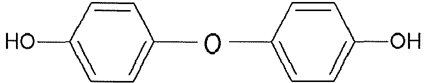 |
| 4,4'-dihydroxydiphenylsulfide | 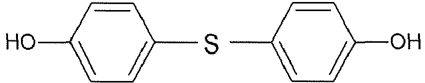 |
| 4,4'-dihydroxydiphenylmethane | 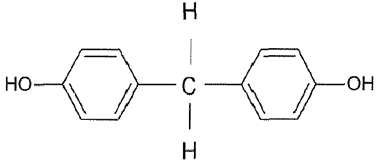 |
| 2,2'-bis(p-hydroxyphenyl)propane (Bisphenol A) | 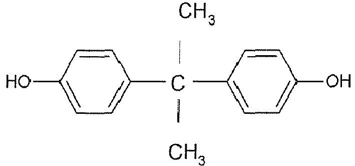 |
| 2,2'-bis(p-hydroxyphenyl) perfluoropropane | 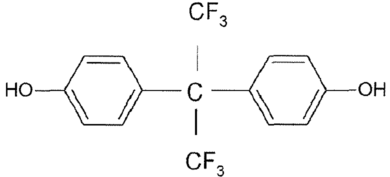 |
| 4,4'-dihydroxybenzophenone | 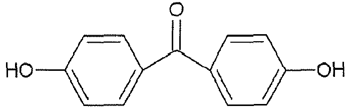 |
| 4,4'-dihydroxydiphenylsulfone | 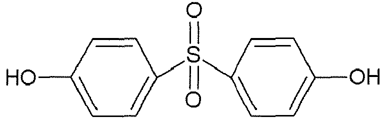 |
| Hydroquinone | 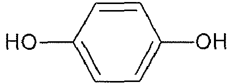 |
| 4,4-dihydroxydiphenyl | 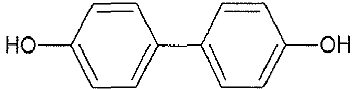 |
| 1,4-bis(4-hydroxyphenyl)benzene | 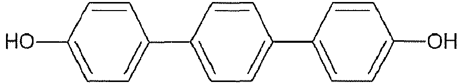 |

The following paragraphs are dedicated to describe the polymer families that may be comprised in the nanocomposite according to the present invention.

### Semi-aromatic polyamides

The polymer may in particular be chosen among semi-aromatic polyamides.

For the purpose of the present description, the term "semi-aromatic polyamide" should be understood as defining any polymer which comprises recurring units obtainable by (and preferably, obtained by) the polycondensation reaction between at least one non-aromatic diacid (or derivatives thereof) and at least one aromatic diamine, and/or recurring units obtainable by (and preferably, obtained by) the polycondensation reaction between at least one aromatic diacid (or derivatives thereof) and at least one non-aromatic diamine.

Very preferably, the semi-aromatic polyamide (SA-PA) comprises recurring units obtainable by (and preferably, obtained by) the polycondensation reaction between an aromatic diamine and an aliphatic diacid (or derivatives thereof) and/or recurring units obtainable by (and preferably, obtained by) the polycondensation reaction between an aromatic diacid (or derivatives thereof) and an aliphatic diamine.

A first class of semi-aromatic polyamides that may be comprised in the nanocomposite according to the present invention are semi-aromatic polyamides (SA-PA1) comprising more than 50 mole % of recurring units obtainable by (and preferably, obtained by) the polycondensation reaction between at least one aliphatic diacid or derivative thereof and at least one aromatic diamine ; preferably more than 75 mole % and more preferably more than 85 mole % of said recurring units can be obtained (and preferably, are obtained) by the polycondensation reaction between at least one aliphatic diacid or derivative thereof and at least one aromatic diamine. Still more preferably, essentially all or even all the recurring units of the semi-aromatic polyamides (SA-PA1) can be obtained (and preferably, are obtained) by the polycondensation reaction between at least one aliphatic diacid or derivative thereof and at least one aromatic diamine.

The expression "at least one aliphatic diacid or derivative thereof' and "at least one aromatic diamine" are understood to mean that one or more than one aliphatic diacid or derivative thereof and one or more than one aromatic diamine can be made to react as above specified. The aromatic diamine is preferably a C6-C24-aromatic diamine, more preferably a C6-C18-aromatic diamine, still more preferably a C6-C10-diamine such as m-xylylene diamine (MXDA). The aromaticity of the aromatic diamine results preferably from the presence therein of m-phenylene and/or o-phenylene groups, in a total amount ranging generally from 1 to 2

Aromatic diamine can be chosen among the one as disclosed above.

A particularly preferred aromatic diamine is m-xylylene diamine (MXDA).

The aliphatic diacid is preferably a C2-C16-aliphatic diacid, more preferably a C4-C12-aliphatic diacid, still more preferably a C6-C10-aliphatic diacid such as adipic acid or sebacic acid. The aliphatic diacid is preferably linear. Cycloaliphatic diacids comprising at least one carbocyclic ring with of from 4 to 8 carbon atoms in the ring, like e.g. cyclohexane dicarboxylic acids may also be used.

Aliphatic diacid can be chosen among the one as disclosed above.

A preferred aliphatic diacid is adipic acid or sebacic acid.

According to a preferred embodiment the aromatic diamine is selected from a C₆-C₂₄-aromatic diamine, more preferably a C₆-C₁₈-aromatic diamine and more preferably a C₆-C₁₀-diamine and the aliphatic diacid is selected form a C₂-C₁₆ aliphatic diacid.

As above mentioned, such aliphatic diacids can be used in the polycondensation reaction preferably in the form of the free acid or the acid chloride.

For the purpose of the present invention, it should be understood that the definition "semi-aromatic polyamides (SA-PA1)" also encompasses polyamides comprising less than 50 mole %, preferably less than 25 mole % and more preferably less than 15 mole % of recurring units obtainable by (and preferably, obtained by) the polycondensation reaction between at least one aliphatic diacid or derivative thereof, as above specified, and at least one aliphatic diamine. In this particular embodiment, said at least one aliphatic diamine may be a comonomer used in conjunction with one of the aromatic diamines as specified above. Aliphatic diamine may be chosen among the one as disclosed above. A preferred aliphatic diamine in this regard is 1,6-diaminohexane (hexamethylenediamine (HMDA)).

Cycloaliphatic diamines as described above are also suitable.

Another class of semi-aromatic polyamides (SA-PA) comprised in the nanocomposite according to the present invention are semi-aromatic polyamides (SA-PA2) comprising more than 50 mole % of recurring units obtainable by (and preferably, obtained by) the polycondensation reaction between at least one aromatic diacid, or derivative thereof, and at least one aliphatic diamine.

The expression "at least one aromatic diacid or derivative thereof' and "at least one aliphatic diamine" are understood to mean that one or more than one aromatic diacid or derivative thereof and one or more than one aliphatic diamine can be made to react as above specified.

A preferred aliphatic diamine in this embodiment is hexamethylenediamine (HMDA).

Aromatic diacids and derivative thereof employed in the polycondensation reaction to yield the semi-aromatic polyamides (SA-PA2) may be chosen among the one as disclosed above.

Preferably, the semi-aromatic polyamides (SA-PA2) comprised in the nanocomposite according to the present invention are polyphthalamides, i.e. aromatic polyamides of which more than 50 mole % of the recurring units are obtainable by (and preferably, obtained by) the polycondensation reaction between at least one phthalic acid, chosen preferably among IPA, TPA and PA, or derivative thereof, and at least one aliphatic diamine.

The semi-aromatic polyamides (SA-PA2) may also be chosen from poly(tere/iso)phthalamides.

For the purpose of the present invention, poly(tere/iso)phthalamides are defined as aromatic polyamides of which:
(i) more than 50 mole % of the recurring units are formed by the polycondensation reaction between a mixture of terephthalic acid and isophthalic acid, and at least one aliphatic diamine ;
(ii) more than 25 and up to 50 mole % of the recurring units are formed by the polycondensation reaction between terephthalic acid and at least one aliphatic diamine; and
(iii) from 1 to 25 mole % of the recurring units are formed by the polycondensation reaction between isophthalic acid and at least one aliphatic diamine.

Poly(tere/iso)phthalamides may further comprise recurring units formed by the polycondensation reaction between at least one aliphatic diacid and at least one aliphatic diamine. In addition, poly(tere/iso)phthalamides are preferably free of recurring units formed by the polycondensation reaction between (ortho)phthalic acid (PA) and at least one diamine (aliphatic or aromatic).

The semi-aromatic polyamide (SA-PA2) may also be chosen from polyterephthalamides or polyisophthalamides.

For the purpose of the present invention, polyterephthalamides respectively polyisophthalamides are defined as aromatic polyamides of which more than 50 mole % of the recurring units are formed by the polycondensation reaction between terephthalic respectively isophthalic acid and at least one aliphatic diamine.

A first class of polyterephthalamides respectively polyisophthalamides consists of respective polyamides essentially all, if not all, the recurring units of which are formed by the polycondensation reaction between terephthalic acid respectively isophthalic acid and at least one aliphatic diamine [class (I)].

A second class of polyterephthalamides respectively polyisophthalamides consists of respective polyamides essentially all, if not all, the recurring units of which are formed by the polycondensation reaction between mixtures of terephthalic acid and isophthalic acid and at least one aliphatic diamine [class (II)]. The molar ratio of terephthalic acid to isophthalic acid is not subject to particular restrictions and may be generally in the range of from 85:15 to 15:85, preferably in the range of from 70:30 to 30:70.

A third class of polyterephthalamides respectively polyisophthalamides consists of respective polyamides essentially all, if not all, the recurring units of which are formed by the polycondensation reaction between mixtures of terephthalic acid respectively isophthalic acid and at least one aliphatic diacid, and at least one aliphatic diamine [class (III)]. Such recurring units are respectively referred to as terephthalamide respectively isophthalamide and aliphatic acid-amide recurring units. Within class (III), a subclass consists of polyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is 60 mole % or more; in addition, it is advantageously 80 mole % or less, and preferably 70 mole % or less [subclass (III-1)].

Within class (III), a second subclass consists of polyterephthalamides respectively polyisophthalamides in which the mole ratio of the terephthalamide respectively isophthalamide recurring units based on the total number of moles of the recurring units (i.e. the terephthalamide respectively isophthalamide plus the aliphatic acid-amide recurring units) is less than 60 mole % [subclass (III-2)]. A fourth class of polyterephthalamides respectively polyisophthalamides consists of respective polyamides essentially all, if not all, the recurring units of which are formed by the polycondensation reaction between terephthalic acid, isophthalic acid, at least one aliphatic diacid and at least one aliphatic diamine [class (IV)].

Aliphatic acids and aliphatic amines useful for classes (I) to (IV) are those above described as suitable for polymers SA-PA1 and SA-PA2.

Among all semi-aromatic polyamides (SA-PA) described here above, semi-aromatic polyamides (SA-PA1) are often preferred as components of the nanocomposite in accordance with the instant invention. MXD6 and MXD10 polymers are especially preferred as the semi-aromatic polyamide (SA-PA).

For the purpose of the present invention, a MXD6 polymer is intended to denote a semi-aromatic polyamide essentially all, if not all, the recurring units of which are obtainable by (and preferably, obtained by) the polycondensation reaction of adipic acid with meta-xylylene diamine.

For the purpose of the present invention, a MXD10 polymer is intended to denote a semi-aromatic polyamide essentially all, if not all, the recurring units of which are obtainable by (and preferably, obtained by) the polycondensation reaction of sebacic acid with meta-xylylene diamine.

### Aliphatic polyamides

The polymer may in particular be chosen among aliphatic polyamides.

For the purpose of the present description, the term "aliphatic polyamide" should be understood as defining any polymer which comprises recurring units obtainable by (and preferably, obtained by) the polycondensation reaction between at least one aliphatic diacid (or derivatives thereof) and at least one aliphatic diamine.

More specifically for the purpose of the present invention, the definition "aliphatic polyamide" is intended to denote any polyamide more than 50 mole %, preferably more than 75 mole % and more preferably more than 85 mole % of the recurring units of which are obtainable by (and preferably, obtained by) the polycondensation reaction between at least one aliphatic diacid (and/or a derivative thereof) and at least one aliphatic diamine, and/or by the auto-polycondensation reaction of an amino carboxylic acid and/or a lactam.

Said monomers may advantageously be chosen among the hereabove described monomers.

More preferably, the aliphatic polyamide (PA) is chosen from poly(hexamethylene adipamide) (nylon 66), poly(hexamethylene azelaamide)

(nylon 69), poly(hexamethylene sebacamide) (nylon 610), poly(hexamethylene dodecanoamide) (nylon 612), poly(dodecamethylene dodecanoamide) (nylon 1212), poly(11-amino-undecano-amide) (nylon 11) and their copolymers or mixtures thereof Examples ofpolyamides obtainable by (and preferably, obtained by) the auto-polycondensation reaction of an amino carboxylic acid and/or a lactam are the polycaprolactam (nylon 6), and the poly(11-amino-undecano-amide). Cycloaliphatic polyamides obtainable from cyclic monomers as mentioned hereinbefore as suitable monomers for the semi-aromatic polyamides may also be mentioned.

More preferably, the aliphatic polyamide (PA) is chosen from nylon 6 and nylon 66.

Still more preferably, the aliphatic polyamide (PA) is nylon 66, i.e. the polyamide obtainable by (and preferably, obtained by) the polycondensation reaction between 1,6-hexamethylenediamine and adipic acid.

### Polyesteramides

The polymer may in particular be chosen among polyesteramides.

For the purpose of the present description, the term "polyesteramides" should be understood as defining any polymer which comprises both ester and amide groups.

Aromatic and aliphatic diamines as described above may be useful for the preparation of polyersteramides.

### Polyurethanes

The polymer may in particular be chosen among polyurethanes.

Aromatic diols as described above may be useful for the preparation of polyurethanes, by reaction with a diisocyanate derivative.

### Polyimides

The polymer may in particular be chosen among polyimides.

For the purpose of the present description, the term "polyimides" should be understood as defining any polymer which comprises imide groups. It may be a linear polyimide or aromatic heterocyclic polyimide.

Aromatic diamines as described above may be useful for the preparation of polyimides.

### Polyamide-imides

The polymer may in particular be chosen among polyamide-imides.

Aromatic diamines as described above may be useful for the preparation of polyamide-imides.

### Polyarylene-polyethers

The polymer may in particular be chosen among polyarylene-polyethers.

As a first embodiment of said polyarylene polyethers, poly(arylether sulfones) may be cited. For the purpose of the present invention, poly(arylether sulfones) should be understood to cover polymers wherein at least 5% o the recurring unites (RU) are derived from one or more formulae comprising at least one arylene group, at least one ether group (-O-) and at least one suflone group (-SO₂-). They may be in particular obtained by polycondensation of at least one dihalodiphenyl sulfone with at least one diol, in particular as described above. The dihalodiphenylsulfone may be 4,4'-dihalodiarylsulfone.

### Polyether-imides

The polymer may in particular be chosen among polyether-imides

Aromatic diamines as described above may be useful for the preparation of polyether-imides.

### Polyesters

The polymer may in particular be chosen among polyesters.

For the purpose of the present description, the term "polyester" should be understood as defining any polymer which comprises ester functional groups in the main chain.

Aromatic diols and carboxylic diacids as described above may be useful for their preparation.

### Polyester-imides

The polymer may in particular be chosen among polyester-imides.

Aromatic diamines as described above may be useful for the preparation of polyester-imides.

### Polymeric amic acid derivatives

The polymer may in particular be chosen among polymeric amic acid derivatives.

Aromatic diamines as described above may be useful for the preparation of amid-polyacids.

The molecular weight of the polymer comprised in the nanocomposite according to the present invention is not particularly limited.

### MASTERBATCH / OPTIONAL DILUTION STAGE

According to a particular embodiment, the present invention further relates to a process for producing a Masterbatch.

As used herein the term "Masterbatch" means a nanocomposite filled with a high or even very high amount of particles. This concentrated or even highly concentrated nanocomposite may be easily incorporated/diluted into a compatible polymer matrix by any means known to the man skilled in the art.

Therefore, the present invention also concerns a process for manufacturing a thermally reduced graphene oxide-polymer Masterbatch from graphene oxide and monomer(s) comprising at least:
(A) a thermal reduction of graphene oxide, so as to form said thermally reduced graphene oxide, and
(B) a polymerization of the monomer(s) in the presence of said thermally reduced graphene oxide to yield said Masterbatch,
(A) and (B) being performed in the same reactor,
wherein polymerization (B) is only started when the oxygen content of the thermally reduced graphene oxide formed from the graphene oxide reaches a value below 15wt%.

Masterbatch obtainable by the process according to the present invention form part of the present invention.

Highly concentrated Masterbatch (MB) are produced according to *the in situ* polymerization as described above. The thermally reduced graphene oxide concentration of said Masterbatch may more particularly be present in a minimum 3wt%, preferably ranges from 3 to 5wt%, or more preferably from 5 to 10wt%, and for example from 10 to 20wt%, relative to the total weight of the Masterbatch.

According to another embodiment, the obtained nanocomposite Masterbatch is further diluted with a polymer matrix. This strategy presents the advantage that the final user may prepare all nanocomposite with respect to the filler amount by implementing a dilution stage. Said dilution stage may for example be performed *via* extrusion. Adding this dilution stage is moreover less time consuming than performing several *in situ* polymerization steps for the different targeted concentrations.

Said two stages protocol, or process comprising an additional dilution stage, can enhance even better the dispersion, and consequently the properties of the nanocomposite.

It may also allow combining the properties of different polymers when they are of different nature between the nanocomposite and the polymer matrix.

The Masterbatch may be diluted with pure polymer matrix, for example which comprises the same polymer as the one of the nanocomposite, a different one or a mixture of the same as the one of the nanocomposite and a different one.

For example, when the Masterbatch as obtained according to the present invention is formed with a semi-aromatic polyamide, the polymer matrix may be made of the same semi-aromatic polyamide (SAP) or of a different nature polyamide, which may be an aliphatic polyamide (PA) or a mixture of semi-aromatic polyamide and polyamide (SAP+PA), to reach a lower TRGO loading in the final sample. This dilution may occur in the melt using industrial equipment like an extruder or an internal mixer.

According to a preferred embodiment, an extruder is used.

The mixing parameters are fixed according to the general knowledge of the man skilled in the art.

It is also possible to add another filler during the dilution stage, said additional filler, like plasticizer and compatibilizer.

When the Masterbatch is a TRGO-semi aromatic polyamide nanocomposite, it may be diluted into all the types of semi-aromatic polyamides as described above, such as SA-PA1 and SA-PA2.

Particularly beneficial results are obtained when diluting a Masterbatch based on semi-aromatic polyamide (SA-PA1) as obtained according to the invention with MXD6 polymers (as hereabove defined) or MXD10 polymers (as hereinabove defined).

MXD6 polymers and other semi-aromatic polyamides are commercially available notably from Mitsubishi Gas Chemicals. Polymer materials comprising MXD6 and a second polyamide (e.g. of the type as hereinafter referred to as PA3) are notably commercially available as IXEF® polyamides from Solvay Advanced Polymers, L.L.C.

MXD10 polymers are a second group of preferred semi-aromatic polyamides in the nanocomposite in accordance with the instant invention.

Suitable polyphthalamides are available as AMODEL^{®} polyphthalamides from Solvay Advanced Polymers, L.L.C.

Still when the Masterbatch is a TRGO-semi aromatic polyamide nanocomposite, it may be diluted into aliphatic polyamide (PA) such as described above.

Whatever the nature of the polymer forming the MB according to the present invention, it may be diluted to other polymer matrices such as polyurethanes, polyesters, polyamides-imides, polyolefins.

The nanocomposite according to the present invention may be obtained by dilution of a Masterbatch into a polymer matrix comprising polyolefins. As an example a polymer matrix may be cited, comprising a semi-aromatic polyamide, for example amounting from 70 to 90, for example 80% by weight with respect to the total weight of the final polymer matrix, and further comprising polyolefins, for example amounting from 10 to 30% by weight, for example 20% by weight, with respect to the total weight of the final polymer matrix.

"Final polymer matrix" means the polymer matrix enriched with the filler *via* the dilution of the Masterbatch.

Polyolefins may be advantageously present in the polymeric matrix for improving the impact resistance of the nanocomposite while the thermally reduced graphene oxide is present for improving the barrier properties. A typical application for this kind ofnanocomposite is fuel tank application.

### APPLICATIONS

The nanocomposites and Masterbatch according to the present invention may be used for preparing fuel barrier material, in particular for automotive application. They may in particular be useful for the manufacture of fuel tanks and pipes.

They may also be used for preparing thermally conductive, antistatic and barrier polymer material for solid parts or polymer coatings on substrates.

The expressions "between ... and ..." and "ranging from ... to ..." should be understood as meaning limits included, unless otherwise specified.

The examples that follow illustrate the present invention without limiting the scope thereof
"wt%" means % by weight.

### EXAMPLE:

### 1. Graphene material

| **Nature of the graphene material** | **SSA (BET) in m²/g** | **Oxygen content in wt%** |
|---|---|---|
| Expanded graphite sold under the name TIMREX BNB90 by company TIMCAL | 24* | <0.2 |
| Graphene oxide (GO) | 23** | 36 |
| Thermally reduced graphene oxide (TRGO) | | 9 |

| | | |
|---|---|---|
| * measure by protocol A as described above ** measured by protocol B as described above | | |

### 2. Polymer (and monomers)

- MXD6: Para0000 (monomers: adipic acid and meta-xylylene diamine)

### 3. TRGO-MXD6 composite preparation

### 3.1. Preparation of the graphene oxide

The graphene oxide used in the next stages is produced following a modified Hummers method described as follow: 5mg of expanded graphite (TIMREX BNB90) is added slowly to 350ml of H₂SO₄ precooled at 0°C. Then 50 mg KMNO₄ and 7.5 mg NaNO₃ were added gradually with stirring. The temperature of the mixture was always kept below 10°C. The mixture was stirred during 30 min. Subsequently, 660 ml demi-water is slowly added by dropping funnel; consequently, the temperature increased to reach approximately 100°C. The mixture is stirred for 30 min. The reaction is terminated by adding 1000 ml demi-water followed by 66.6 ml of H₂O₂ (30%). The yellow brown color of the mixture indicates that the oxidation of graphite occurred correctly. Next, the mixture is diluted with H₂O and rested overnight so that the mother liquor decants. After removing the liquid phase, the GO is washed two times with 10% HCl (2x11). After, the GO is washed by a succession of agitation in demi-water and centrifugation (10000rpm, 30min) steps until pH-7 of the washing water after centrifugation is reached. Finally, the particles are recovered after freeze-drying.

### 3.2. Production of a Masterbatch

Said stage may be divided in four steps:
- STEP 1: 0.7g of graphite oxide (GO) is introduced in a 50ml autoclave reactor (classic closure type) at room temperature. The remained air is flushed with N₂ in order to have an inert atmosphere in the reactor.
- STEP 2: the N₂ is switched off before heating the GO to 240°C in order to avoid any loss of graphitic material during expansion at around 200°C. The GO is heated during 3h in order to produce thermally reduced graphene (TRGO). The duration of 3 hours allows reaching an oxygen content of 9wt%, measured by XPS.
- STEP 3: The reactor is opened at 240°C and the adipic acid (16.1g) is added and meta-xylylene diamine (14.5ml) monomers (purchased from Aldrich with CAS numbers respectively 124-04-9 and 1477-55-0) in the form of Nylon salt is also added. When the Nylon salt is melted, the reactor is closed.
- STEP 4: the polycondensation of the Nylon salt occurs in presence of the TRGO in the autoclave reactor, under nitrogen flow (0.5bar) and mechanical stirring (200rpm) with different steps of temperature. The polymerization starts at 240°C during 2h before increasing the temperature at 250°C for 1h. Then the pressure is decreased to -1bar during 30min to maximize the monomer conversion into polymer. Finally, the melt polymer containing 5wt% of TRGO is recovered using a spatula. This amount is expressed in weight ratio TRGO/polymer.

### 3.3. Dilution of the Masterbatch

Said Stage consists of diluting the Masterbatch obtained above at point 3.2. with pure commercial MXD6 (PAra0000 from Solvay) polymer matrix to reach 2wt% of TRGO in the final sample. This filler content is obtained by mixing 7.5g of MB with 7.5g of MXD6 in a lab scale twin-screw extruder (XPlore MC15 from DSM) operated in recycle mode with the following conditions: under nitrogen flow, at 260°C and screws rotation speed of 250rpm and a residence time of 5min.

### 4. Specimens preparation and characterization

### 4.1. Tensile tests

The composite samples are molded by injection for the tensile tests using a DSM mini injection machine. The polymeric sample is melted in the oven at 260°C for 5min and then injected with a pressure of 10 bar in a mold at 40°C. Some dogbone like samples are used following the ASTM D638 norm.

The tensile tests are performed using a Zwickline (model Z2.5) machine at room temperature and a tensile speed of 2.5mm/min. The tangent modulus is measured between 0.005 and 1% of deformation.

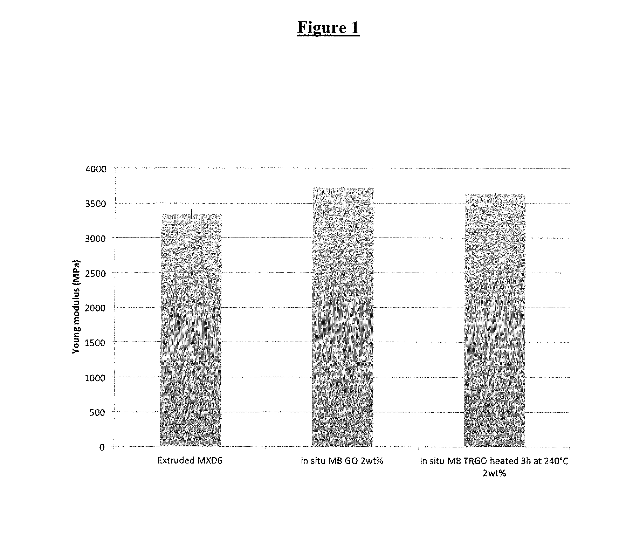

The Figure 1 shows that the Young modulus of two samples obtained by *in situ* polymerization in presence of GO (3730 MPa) or TRGO (3630MPa) are very similar. But in both cases there is an increase compared to the extruded commercial MXD6 polymer matrix (2434 MPa).

In the case of *in situ* polymerization directly with GO, the decrease of the transition temperatures (-4°C for Tg and -10°C for Tm and Tc), measured by Differential scanning calorimetry (heat/cool/heat, heat speed: 10°C/min, cooling speed: 5°C/min from 0 to 300°C under N₂), is the sign of a decrease of the polymer average molecular weight.

### 4.2. Transversal resistivity

The transversal resistivity measurements are performed on compression-molded disks using a Carver hot press. The samples are first melted during 5min30s and pressed at 10bars during 3min. The mould is then directly cool down to room 20°C at 10 bars using another Carver press cooled by water flow. The specimens are 10 cm in diameter and 750µm thick. The resistivity is measured in order to evaluate the graphitic material dispersion within the polymeric matrix. Indeed, at the same loading, if the filler dispersion quality increases, the electrical conductivity is also improved. We used a two probes test in an isolate box in order to measure some low conductive materials. The apparatus used is a two-probe test method, where an electrometer Keithley (Model 8009 test fixture) is able to measure volume resistivity of insulating materials up to 10¹⁸ Ohm cm.

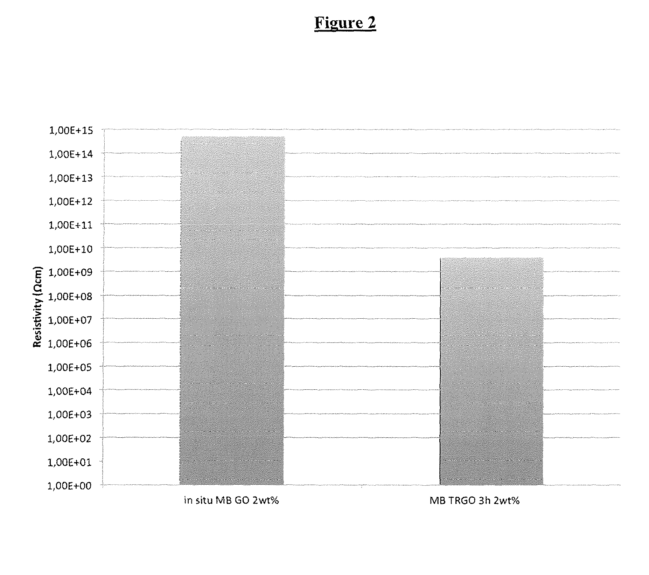

Figure 2 represents a comparison between a sample obtained by a polymerization performed simultaneously with the reduction step as disclosed in the prior art and a sample obtained by a process according to the invention, i.e. wherein the polymerization step occurs only when the reduction step is achieved. Both samples contain 2wt% of filler.

On the figure 2, we can clearly see the advantage of the pre-reduction of the GO before the polymer polycondensation. The MXD6 polycondensation in presence of GO results in an electrically insulating material (4 10¹⁴ Ohm.cm) compared to the one polymerized in presence of TRGO (3 10⁹ Ohm.cm).

### 4.3. Study of the impact of the filler content on mechanical properties

The present study is performed to evaluate the influence of the filler content on the materials properties by testing various dilution rates of the Masterbatch.

Figure 3 represents the results of Young Modulus for samples obtained according to the invention process, with a various final TRGO loadings, varying from 0.5wt% to 4wt%.

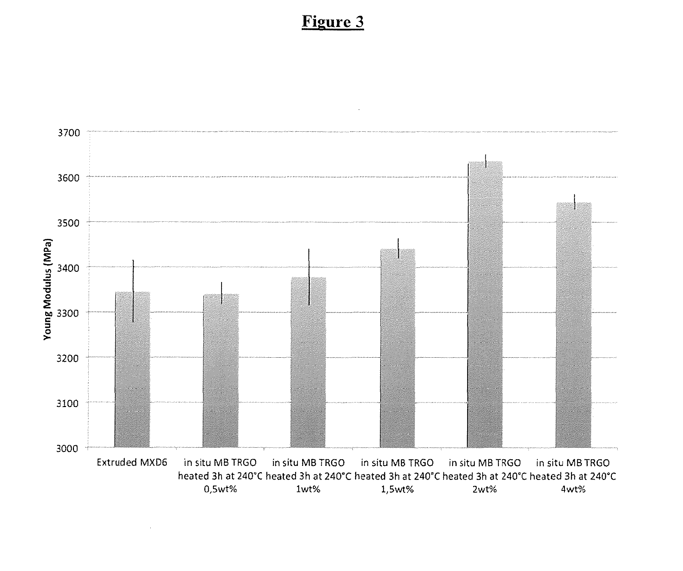

Figure 3 shows an increase of the Young's modulus with the TRGO content, which corresponds to an increase of the material strength due to the addition of the graphene filler. The sample loaded with 2wt% shows a higher Young's modulus likely due to the fact that the percolation threshold is reached.

### 4.4. Study of the filler content on resistivity measure

The present study is performed by measurement of the transversal resistivity in order to evaluate the graphene material dispersion quality and the TRGO reduction extend.

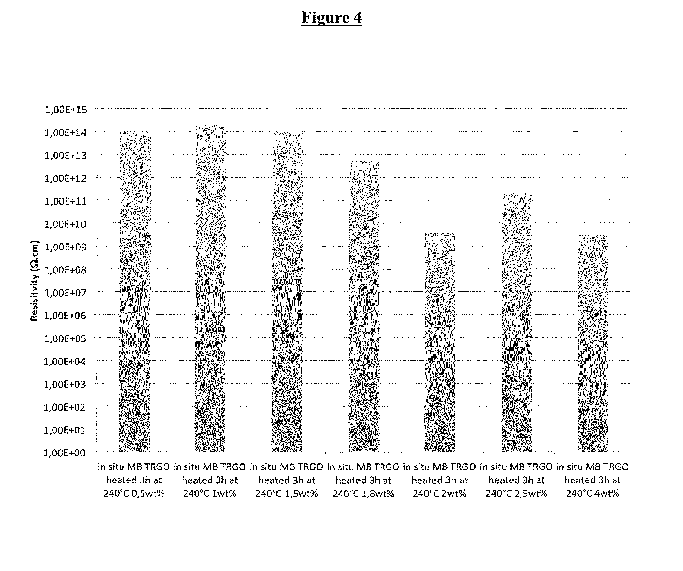

Figure 4 represents the results of resistivity for samples obtained according to the invention process, with a various final TRGO loadings, varying from 0.5wt% to 4wt%.

On the figure 4, a decrease of the resistivity with the TRGO content increase can be observed. A 5 decades decrease can be noticed from the 0.5wt% to the 4wt% sample. The maximum of conductivity seems to be reached at 2wt% which is also supposed to be close to the electrical percolation threshold. This percolation threshold is also confirmed by rheology with the apparition of a plateau on the G' curve at low frequencies.

## Claims

1. Process for manufacturing a thermally reduced graphene oxide-polymer nanocomposite from graphene oxide and monomer(s) comprising at least:
(A) a thermal reduction of graphene oxide, so as to form said thermally reduced graphene oxide, and
(B) a polymerization of the monomer(s) in the presence of said thermally reduced graphene oxide to yield said nanocomposite,
(A) and (B) being performed in the same reactor,
wherein polymerization (B) is only started when the oxygen content of the thermally reduced graphene oxide formed from the graphene oxide reaches a value below 15wt%.

2. Process according to claim 1, wherein polymerization (B) is only started when the oxygen content of the thermally reduced graphene oxide formed from the graphene oxide reaches a value ranging from 2 to 15%, in particular equal or below 9%, and more particularly from 2 to 9%.

3. Process according to anyone of the preceding claims, wherein the graphene oxide is reduced by heating at a temperature greater than the polymerization temperature, the temperature difference between the reduction temperature and the polymerization temperature being equal or less than 100°C, in particular equal or less than 20°C.

4. Process according to anyone of the preceding claims, wherein polymerization (B) is a melt polymerization, and is in particular performed under inert gas, more particularly under stirring and under heating and optionally under pressure.

5. Process according to anyone of the preceding claims, wherein the monomer(s) is/are suitable for preparing of a polymer selected from semi-aromatic polyamides, aliphatic polyamides, polyesteramides, polyurethanes, polyimides, polyamide-imides, polyarylene-polyethers, polyesters, polyether-imides, polyester-imides, polymeric amic acid derivatives.

6. Process according to anyone of the preceding claims, wherein the polymer is a semi-aromatic polyamide.

7. Process according to the preceding claim, wherein the polymerization is a polycondensation reaction between at least one aromatic diamine and at least one aliphatic diacid or derivatives thereof

8. Process according to claim 7, wherein the aromatic diamine is selected from a C₆-C₂₄-aromatic diamine, more preferably a C₆-C₁₈-aromatic diamine and more preferably a C₆-C₁₀-diamine and the aliphatic diacid is selected from a C₂-C₁₆ aliphatic diacid.

9. Process according to the preceding claim, wherein the aromatic diamine is m-xylylene diamine and the aliphatic diacid is adipic acid.

10. Process according to claim 6, wherein the polymerization is a polycondensation reaction between at least one aromatic diacid or derivatives thereof and at least one aliphatic diamine.

11. Process according to anyone of the preceding claims, wherein the thermally reduced graphene oxide is present in the nanocomposite in an amount ranging from 0.01 to 20%, in particular from 0.01 to 10%, and more particularly from 0.5 to 5% by weight, with respect to the total weight of the nanocomposite.

12. Process according to anyone of the preceding claims, wherein the obtained nanocomposite is further diluted with a polymer matrix, in particular in the melt form, more particularly using extrusion or an internal mixer, preferably extrusion.

13. Process according to the preceding claim, wherein the polymer matrix comprises the same polymer as the one of the nanocomposite, a different one or a mixture of the same as the one of the nanocomposite and a different one, and in particular the polymer matrix comprises a semi-aromatic polyamide or an aliphatic polyamide, a mixture of semi-aromatic polyamide and aliphatic polyamide or a mixture of a semi-aromatic polyamide and another polymer, such a polyolefin.

14. Graphene material-polymer nanocomposite obtainable by the process according to anyone of the preceding claims (in particular, graphene material-polymer nanocomposite obtainable by the process according to anyone of the preceding claims wherein the graphene material is a thermally reduced graphene oxide), wherein the graphene material is present in the nanocomposite in an amount of less than 3% by weight, in particular of less than 2.5% by weight and more particularly equal or less than 2% by weight, with respect to the total weight of the nanocomposite, and wherein the nanocomposite has a transversal resistivity which is at least decreased by a factor 10⁵ compared to a reference nanocomposite obtained by *in situ* simultaneous reduction of the graphene oxide and the polymerization of the same polymer in presence of the graphene oxide.

15. Masterbatch obtainable by the process according to anyone of claims 1 to 11, wherein the thermally reduced graphene oxide is present in the Masterbatch in an amount above 3% by weight, in particular ranging from 3 to 5% by weight, in particular from 5 to 10% by weight, for example from 10 to 20% by weight, with respect to the total weight of the Masterbatch.
